# EUROPEAN PATENT SPECIFICATION

(11) **EP 2 430 681 B1**
(45) Date of publication and mention of the grant of the patent: **04.11.2015**
(21) Application number: 10774514.3
(22) Date of filing: 14.04.2010
(51) Int. Cl.: H01M 2/00, H01M 2/10, H01M 2/26, H01M 2/34, H01M 10/00

(54) **BATTERY SPACER, PROTECTION ASSEMBLY FOR ELECTRIC CORE AND POWER BATTERY**
BATTERIE-ABSTANDSVORRICHTUNG, SCHUTZVORRICHTUNG FÜR ELEKTRISCHE POLE UND STROMBATTERIE
ESPACEUR DE BATTERIE, ENSEMBLE PROTECTION POUR NOYAU ÉLECTRIQUE ET BATTERIE DE PUISSANCE

(30) Priority: 13.05.2009 CN 200920131817 U
(43) Date of publication of application: 21.03.2012
(73) Proprietor: BYD Company Limited, Shenzhen, Guangdong 518118 (CN)
(72) Inventor: JIANG, Luxia, Guangdong 518118 (CN); ZHU, Jianhua, Guangdong 518118 (CN)
(74) Representative: Hoffmann Eitle
(86) International application number: PCT/CN2010/071762
(87) International publication number: WO 2010/130173

(56) References cited:
- CN-A- 101 662 045
- CN-Y- 2 833 901
- CN-Y- 201 430 167
- JP-A- 11 025 993
- JP-A- 2005 209 365
- JP-A- 2006 012 657
- KR-A- 20090 042 608
- US-A1- 2007 238 018

## Description

### FIELD OF THE INVENTION

The present invention generally relates to power battery technology field, in particular to a battery spacer, a protection assembly for battery electric core comprising the battery spacer and a power battery containing the protection assembly.

### BACKGROUND

With non-renewable resources such as petroleum drying up and the environmental pollution becoming serious, people pay more attention to new energy vehicles. Power battery is a heart part of the new energy vehicle. Since vehicles have great mobility and may be often subject to vibration and impacts, the requirements for the safety and reliability of power battery are high.

Conventionally, a power battery generally comprises a positive electrode, a negative electrode, an electric core formed by overlapping a plurality of layers of flexible members, electrolyte, a battery cover and a battery shell, a spacer is disposed between the electric core and battery cover. The capacity and the volume of the power battery are high, and the electric core therein has a high volume. Meanwhile, since the electric core is formed by a plurality of layers of flexible members, the core is easy to damage during conveying. For batteries containing a plurality of electric cores, the combination and orientation of the electric cores are difficult. During assembling of the battery, especially while fitting the battery shell over the electric core, the friction between the electric core and the battery shell surface may bring great damages to the electric core. In use, the vibration and jolt of the vehicle may cause the electric core to move in the shell, which may cause damages to the electric core, thus resulting in the following problems: the current collector may be broken, the separator may shrink, the material of the electrode plate may peel off, the welding point is destroyed by the impacts, thus bring hidden safety hazard to the battery.

### SUMMARY

The present invention is directed to solve at least one of the problems existing in the prior art.

In a first aspect of the present invention, there is provided a battery spacer that may meet the insulating requirements and provide good protection for an end of the electric core.

In a second aspect of the present invention, there is provided a protection assembly for electric core having the battery spacer of the first aspect, which may provide good protection for the electric core.

In a third aspect of the present invention, there is provided a power battery having the protection assembly for electric core of the second aspect.

According to the first aspect, there is provided a battery spacer comprising a spacer body a tab passing area located at a middle part thereof and adapted to receive an end of an electric core of the battery, and receiving areas adjacent to two ends of the tab passing area in a longitudinal direction of the spacer body, the receiving area providing enough space for the rounded corner of the electric core; each receiving area has a trough-like structure surrounded by an end wall, two side walls and a top wall of the spacer body and the tab passing area, wherein at least one tab aperture is formed in the tab passing area and penetrates the spacer body.

According to the second aspect, there is provided a protection assembly for electric core of a battery comprising an upper battery spacer; a lower battery spacer; two side boards, two ends of each side board are fixed to the upper and lower battery spacers respectively, in which each of the upper and lower batter spacer is the batter spacer according to the first aspect.

According to the third aspect, there is provided a power battery comprising a protection assembly for electric core of a battery, and at least one electric core received in the protection assembly.

According to embodiments of the present invention, the receiving area has a trough-like structure, so that during assembling of the battery, the receiving area provides an enough space for the rounded corner of the electric core and protects the ends of the electric core.

The protection assembly has a frame-like structure which may provide a good protection for the electrode during conveying, usage and production and decrease the risk of cockling of the separator towards the shell and relative sliding between electric cores during fitting the shell over the electric core, thus enhancing the vibrating resistance and safety performance.

### BRIEF DESCRIPTION OF THE DRAWINGS

Fig 1 is a perspective view of the protection assembly for electric core according to an embodiment of the present invention.
Fig 2 is a perspective view of the battery spacer in Fig. 1 viewing from the top.
Fig 3 is a perspective view of the battery spacer in Fig. 1 viewing from the bottom.
Fig 4 is a perspective view of the side board shown in Fig 1.
Fig 5 is a partial section view of the assembled battery spacer and the electric core shown in Fig 1.
Fig 6 is a top view of the assembled battery spacer and the side boards according to the embodiment of the present invention.

### DETAILED DESCRIPTION OF EMBODIMENTS

These and other aspects, solutions and advantages of the invention will become apparent and more readily appreciated from the following descriptions taken in conjunction with the drawings, and the embodiments should be considered as an explanation instead of limitation to the invention.

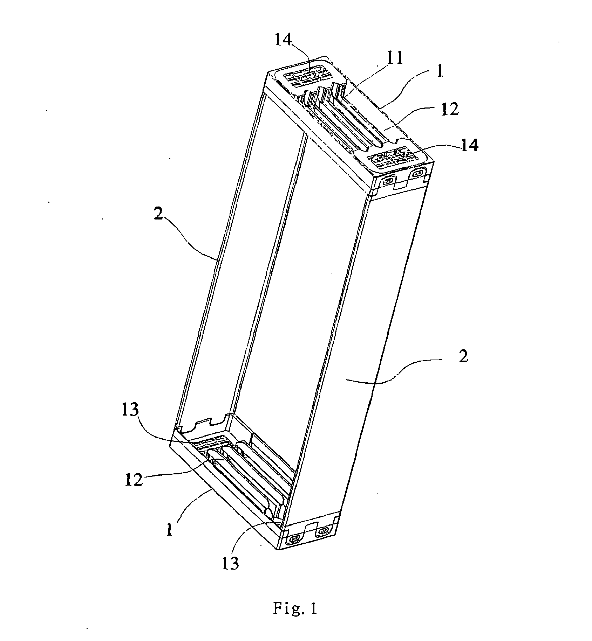

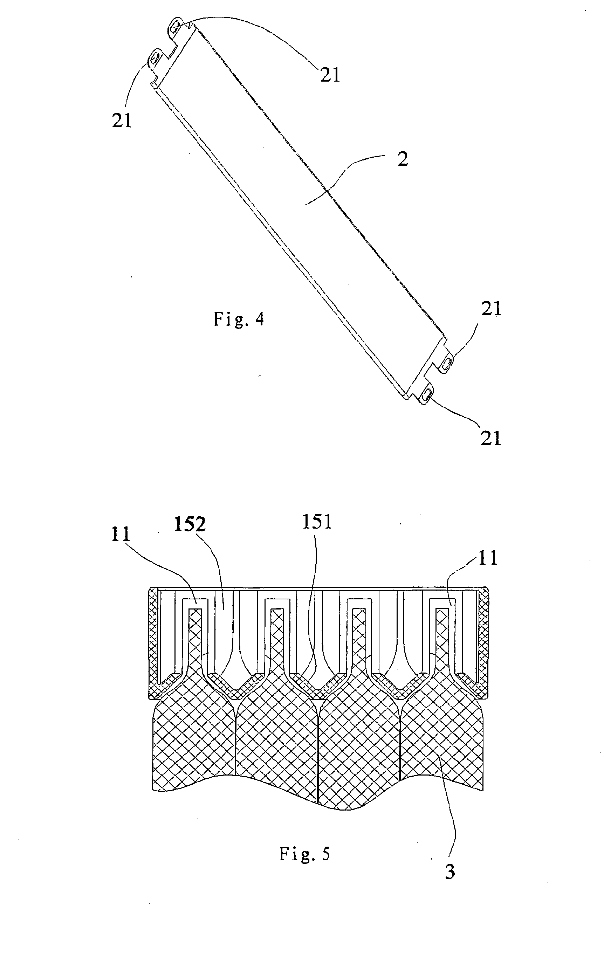

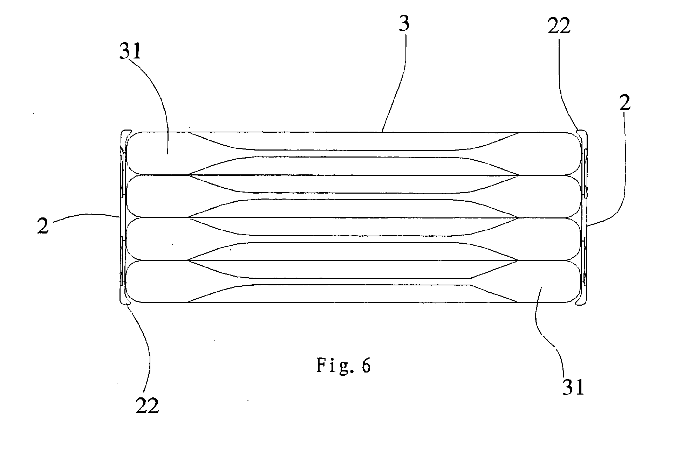

Fig 1 is a perspective view of the protection assembly for electric core according to an embodiment of the present invention. In this embodiment, the protection assembly for electric core has a frame-like structure and comprises an upper and a lower battery spacers 1, and two side boards 2 fixed with the upper and lower battery spacers 1. The battery spacer 1 and side board 2 may be made of an insulating material that is electrolyte-resistant and has good injection molding performance and mechanical strength. Since the protection assembly for the electric core has a frame-like structure, it may form a framework for the electric core 3 (refer to Fig. 5 and Fig. 6). The frame-like structure may provide a good protection for the electric core 3, and decreases the risk of cockling of the separator of the battery towards the shell and relative sliding between electric cores during fitting the shell over the electric core, thus enhancing the vibrating resistance and safety performance.

Each part of the above protection assembly will be described in more details below.

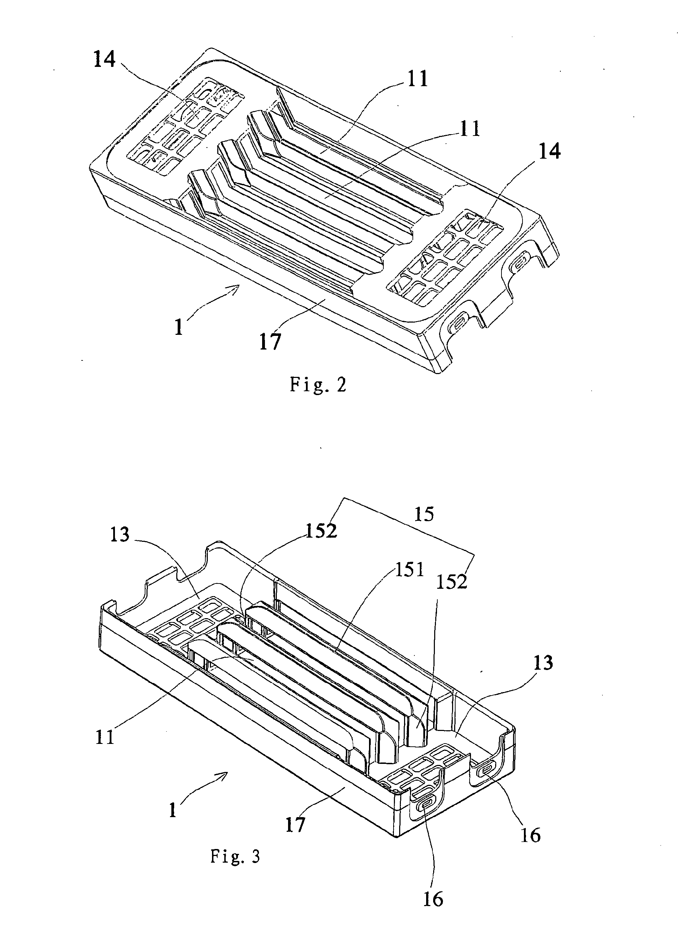

Refer to Fig. 2 and Fig. 3, the battery spacer 1 comprises a spacer body 17, the spacer body 17 has a box-like structure and the bottom (the upper surface in Figs. 2 and 3) of the spacer body 17 is open. The spacer body 17 defines a space therein. The space has a tab passing area located at a middle part thereof and adapted to receive the end of the electric core 3, and two receiving areas 13 for the electric core adjacent to two ends of the tab passing area in a longitudinal direction of the spacer body 17. The tab passing area is used for passing through a tab, and the receiving area 13 has a trough-like shape surrounded by one end wall, two side walls and the top wall of the spacer body 17 and the tab passing area. At least one tab aperture 11 penetrating the spacer body 17 is formed in the tab passing area. Since the battery spacer 1 has a trough-like receiving area 13 at both longitudinal ends of the space. During assembling of the battery, the battery spacer 1 may provide an enough receiving space for the rounded corner part 31 of the electric core 3, and protect the end of the electric core 3. A plurality of through holes 14 are formed in the top wall of the spacer body at the receiving area 13. The through holes 14 facilitate gas discharging and electrolyte injection, and may avoid the risk of the contact between the battery cover (not shown in figures) and the tabs.

A plurality of tab apertures 11 each having a substantial "[" shape are formed in the tab passing area. The tab apertures 11 are spaced and formed by at least one "["shaped beam 15 disposed along the longitudinal direction of the spacer body 17, and two ends of each tab aperture 11 are communicated with the receiving area 13 in the longitudinal direction of the spacer body 17. The beam 15 comprises a main portion 151 and connection portions 152 at two ends of the main portion 151. The connection portions 152 are extended respectively from the tab passing area towards the electric core. Therefore, a predetermined space is formed at the outer side of the main portion 151 of the beam 15, the predetermined space is used and sufficient for the cover board extracting tabs, welding tabs and so on. If there is only one tab aperture 11, the beam 15 is not necessary any more, and an aperture may be directly formed in the tab passing area.

Referring to Fig. 5, the main portion 151 of the beam has a V-shaped section. Grooves are formed between adjacent main portions 151, which are adapted to receive the end portion of the electric core 3 which becomes thin gradually. The above mentioned structure may reduce movement of the electrode 3 upon the movement of the battery and also decreases the effect of vibration and impact to the electric core 3. The main portion 151 of the beam 15 has uniform thickness in the longitudinal direction of the spacer body 17. Therefore, deformation of the battery spacer during injection molding caused by thickness variation may be reduced, meanwhile, the amount of the raw material is decreased so that the cost is low and the battery is light-weight.

The battery spacer 1 has two snap tongues 16 at both ends for connection with the side board 2 so as to form a frame.

Referring to Fig. 4, the side board 2 has a flat plate shape, two snap holes 21 are formed at both ends of the side board 2 for fitting with the snap tongues 16 at both ends of the battery spacer 1. Each of the snap tongue 16 and the snap hole 21 may be one or more. Referring to Fig. 6, a locating arc portion 22 is extended form each lateral side of the side board 2 , and the locating arc portion is bent towards the electric core 3. The locating arc portion 22 enhances the strength of the side board 2 so as to enhance the supporting strength of the framework of the electric core 3. In addition, the locating arc portion 22 may protect the side surface of the electric core 3. The battery spacer 1 and the side boards 2 connected via the snap tongues 16 and the snap holes 21 form a frame as shown in Fig 1. To further improve the strength of the frame, the joint of the snap tongues 16 and the snap holes 21 is fastened by welding such as ultrasonic welding, hot melting welding, laser welding and so on.

The protection assembly of the electric core may be applied to a single-core battery or a multiple-core battery. For the single-core battery, during assembling, the electric core is disposed into the battery shell. Conventionally, adhesive tape is used to pre-secure the electric cores. However, during disposing the core into the shell, relative sliding may occur between the electric cores or current collectors. Meanwhile, the insulating material in the outmost layer of the electrode may be damaged. According to embodiments of the invention, the attaching adhesive tape may be omitted, which increases the efficiency and decreases relative sliding between the electric cores or current collectors and the negative effects to the insulating material in the outmost layer of the electrode.

Although explanatory embodiments have been shown and described, it would be appreciated by those skilled in the art that changes, alternatives, and modifications can be made in the embodiments without departing from spirit and principles of the invention. Such changes, alternatives, and modifications all fall into the scope of the claims and their equivalents.

## Claims

1. A battery spacer (1), comprising:
a spacer body (17) having a tab passing area (12) located at a middle part thereof and adapted to receive an end of an electric core (3) of the battery, and receiving areas (13) adjacent to two ends of the tab passing area in a longitudinal direction of the spacer body, the receiving area providing enough space for the rounded corner of the electric core;
wherein each receiving area has a trough-like structure surrounded by an end wall, two side walls and a top wall of the spacer body (17) and the tab passing area (12), at least one tab aperture is formed in the tab passing area and penetrates the spacer body.

2. The battery spacer according to claim 1, wherein a plurality of through holes is formed in each receiving area (13) and penetrates the top wall of the spacer body.

3. The battery spacer according to claim 1, wherein a plurality of tab apertures (11) are formed in the tab passing area (12) and each have a "[" shape, the tab apertures are spaced and formed by at least one beam (15) having a "[" shape and disposed along the longitudinal direction of the spacer body (17), two ends of each tab aperture (11) are communicated with the receiving area (13) in the longitudinal direction of the spacer body.

4. The battery spacer (1) according to claim 3, wherein the beam (15) comprises a main portion (151) and connection portions (152) at two ends of the main portion (151), the connection portions are extended respectively from the tab passing area (12) towards the electric core.

5. The battery spacer according to claim 4, wherein the main portion of the beam (15) has a V-shaped section and a uniform thickness in the longitudinal direction of the spacer body (17).

6. A protection assembly for electric cores (3) of a battery, comprising:
an upper battery spacer (1);
a lower battery spacer (1);
two side boards (2), two ends of each side board (2) are fixed to the upper and lower battery spacers (1) respectively,
wherein each of the upper and lower battery spacer (1) is the battery spacer according to claim 1.

7. The protection assembly for electric cores (3) of a battery according to claim 6, wherein at least one snap tongue (16) is formed at each side of the battery spacer (1), and at least one snap aperture (21) is formed at the side board (2) and adapted to fit with the snap tongue (16), such that the battery spacer (1) is connected with the side board (2) via a snap-fit of the snap tongue (16) and the snap aperture (21).

8. The protection assembly for electric cores of a battery according to claim 7, wherein the battery spacer (1) is welded and fixed with the side board (2) at a joint of the snap tongue (16) and the snap aperture (21).

9. The protection assembly for electric cores of a battery according to claim 8, wherein there are two snap tongues (16) and the snap holes (21) at each side of the battery spacer.

10. The protection assembly for electric cores (3) of a battery according to claim 6, wherein a locating arc portion (22) is extended form each lateral side of the side board (2), and the locating arc portion (22) is bent towards the electric core (3).

11. A power battery, comprising a protection assembly for electric cores of a battery according to claim 7, and at least one electric core (3) received in the protection assembly.

## Patentansprüche

1. Batterie-Abstandsvorrichtung (1) mit:
einem Abstandskörper (17), der einen Anschluss-Durchtrittsbereich (12), der an einem Mittelabschnitt davon angeordnet ist und derart ausgelegt ist, dass er ein Ende eines elektrischen Kerns (3) der Batterie aufnimmt, und Aufnahmebereiche (13) aufweist, die an zwei Enden des Anschluss-Durchtrittsbereichs in einer Längsrichtung des Abstandskörpers angrenzen, wobei der Aufnahmebereich ausreichend Raum für die abgerundete Ecke des elektrischen Kerns bereitstellt;
wobei jeder Aufnahmebereich eine trogartige Struktur aufweist, die von einer Endwand, zwei Seitenwänden und einer oberen Wand des Abstandskörpers (17) und des Anschluss-Durchtrittsbereichs (12) umgeben ist, wobei zumindest ein Anschlussdurchgang in dem Anschluss-Durchtrittsbereich ausgebildet ist und den Abstandskörper durchdringt.

2. Batterie-Abstandvorrichtung nach Anspruch 1, bei der mehrere Durchgangslöcher in jedem Aufnahmebereich (13) ausgebildet sind und durch die obere Wand des Abstandskörpers dringen.

3. Batterie-Abstandsvorrichtung nach Anspruch 1, bei der mehrere Anschlussdurchgänge (11) in dem Anschluss-Durchtrittsbereich (12) ausgebildet sind und jeweils eine "["-Form aufweisen, wobei die Anschlussdurchgänge beabstandet sind und durch zumindest einen Holm (15) ausgebildet sind, der eine "["-Form aufweist und entlang der Längsrichtung des Abstandskörpers (17) angeordnet ist, wobei zwei Enden jedes Anschlussdurchgangs (11) mit dem Aufnahmebereich (13) in der Längsrichtung des Anschlusskörpers in Verbindung stehen.

4. Batterie-Abstandsvorrichtung (1) nach Anspruch 3, bei welcher der Holm (15) einen Hauptabschnitt (151) und Verbindungsabschnitte (152) an beiden Enden des Hauptabschnitts (151) aufweist, wobei sich die Verbindungsabschnitte jeweils von dem Anschluss-Durchtrittsbereich (12) hin zum elektrischen Kern erstrecken.

5. Batterie-Abstandsvorrichtung nach Anspruch 4, bei welcher der Hauptabschnitt des Holms (15) einen V-förmigen Bereich und eine gleichförmige Dicke in der Längsrichtung des Abstandskörpers (17) aufweist.

6. Schutzanordnung für elektrische Kerne (3) einer Batterie mit:
einer oberen Batterie-Abstandsvorrichtung (1),
einer unteren Batterie-Abstandsvorrichtung (1);
zwei Seitenplatten (2), wobei zwei Enden jeder Seitenplatte (2) jeweils an die oberen und unteren Batterie-Abstandsvorrichtungen (1) befestigt sind,
wobei jede der oberen und unteren Batterie-Abstandsvorrichtungen (1) die Batterie-Abstandsvorrichtung gemäß Anspruch 1 ist.

7. Schutzanordnung für elektrische Kerne (3) einer Batterie nach Anspruch 6, bei der zumindest eine Schnappzunge (16) an jeder Seite der Batterie-Abstandsvorrichtung (1) ausgebildet ist, und zumindest eine Schnappöffnung (21) an der Seitenplatte (2) ausgebildet ist und derart ausgelegt ist, dass sie derart mit der Schnappzunge (16) zusammenpasst, dass die Batterie-Abstandsvorrichtung (1) über eine Schnappverbindung der Schnappzunge (16) und der Schnappöffnung (21) mit der Seitenwand (2) verbunden ist.

8. Schutzanordnung für elektrische Kerne einer Batterie nach Anspruch 7, bei der die Batterie-Abstandsvorrichtung (1) mit der Seitenplatte (2) an einer Verbindung der Schnappzunge (16) und der Schnappöffnung (21) verschweißt und befestigt ist.

9. Schutzanordnung für elektrische Kerne einer Batterie nach Anspruch 8, bei der zwei Schnappzungen (16) und die Schnapplöcher (21) an jeder Seite der Batterieabstands-Vorrichtung angeordnet sind.

10. Schutzvorrichtung für elektrische Kerne (3) einer Batterie nach Anspruch 6, bei der ein Positionierungs-Bogenabschnitt (22) von jeder Querseite der Seitenplatte (2) verlängert ist und der Positionierungs-Bogenabschnitt (22) hin zum elektrischen Kern (3) gebogen ist.

11. Leistungsbatterie mit einer Schutzvorrichtung für elektrische Kerne einer Batterie nach Anspruch 7, wobei zumindest ein elektrischer Kern (3) in der Schutzvorrichtung aufgenommen ist.

## Revendications

1. Espaceur de batterie (1), comprenant :
un corps d'espaceur (17) ayant une zone de passage de languette (12) située au niveau d'une partie centrale de celui-ci et adaptée pour recevoir une extrémité d'un noyau électrique (3) de la batterie, et des zones de réception (13) adjacentes aux deux extrémités de la zone de passage de languette dans une direction longitudinale du corps d'espaceur, la zone de réception fournissant un espace suffisant pour le coin arrondi du noyau électrique ;
dans lequel chaque zone de réception a une structure en forme d'auge entourée par une paroi d'extrémité, deux parois latérales et une paroi supérieure du corps d'espaceur (17) et la zone de passage de languette (12), au moins une ouverture de languette est formée dans la zone de passage de languette et pénètre dans le corps d'espaceur.

2. Espaceur de batterie selon la revendication 1, dans lequel une pluralité de trous traversants est formée dans chaque zone de réception (13) et pénètre dans la paroi supérieure du corps d'espaceur.

3. Espaceur de batterie selon la revendication 1, dans lequel une pluralité d'ouvertures de languette (11) sont formées dans la zone de passage de languette (12) et ont chacune une forme de "[", les ouvertures de languette sont espacées et formées par au moins une barrette (15) ayant une forme de "[" et disposée le long de la direction longitudinale du corps d'espaceur (17), deux extrémités de chaque ouverture de languette (11) sont en communication avec la zone de réception (13) dans la direction longitudinale du corps d'espaceur.

4. Espaceur de batterie (1) selon la revendication 3, dans lequel la barrette (15) comprend une partie principale (151) et des parties de liaison (152) au niveau des deux extrémités de la partie principale (151), les parties de liaison s'étendent respectivement de la zone de passage de languette (12) vers le noyau électrique.

5. Espaceur de batterie selon la revendication 4, dans lequel la partie principale de la barrette (15) a une section en forme de V et une épaisseur uniforme dans la direction longitudinale du corps d'espaceur (17).

6. Ensemble de protection pour noyaux électriques (3) d'une batterie, comprenant :
une espaceur de batterie supérieur (1) ;
une espaceur de batterie inférieur (1) ;
deux panneaux latéraux (2), les deux extrémités de chaque panneau latéral (2) sont fixées respectivement aux espaceurs de batterie supérieur et inférieur (1),
dans lequel chacun des espaceurs de batterie supérieur et inférieur (1) est l'espaceur de batterie selon la revendication 1.

7. Ensemble de protection pour noyaux électriques (3) d'une batterie selon la revendication 6, dans lequel au moins une languette d'encliquetage (16) est formée de chaque côté de l'espaceur de batterie (1), et au moins une ouverture d'encliquetage (21) est formée au niveau du panneau latéral (2) et adaptée pour s'ajuster avec la languette d'encliquetage (16), de sorte que l'espaceur de batterie (1) soit relié au panneau latéral (2) par un ajustement par encliquetage de la languette d'encliquetage (16) et de l'ouverture d'encliquetage (21).

8. Ensemble de protection pour noyaux électriques d'une batterie selon la revendication 7, dans lequel l'espaceur de batterie (1) est soudé et fixé au panneau latéral (2) au niveau d'une jonction de la languette d'encliquetage (16) et de l'ouverture d'encliquetage (21).

9. Ensemble de protection pour noyaux électriques d'une batterie selon la revendication 8, dans lequel il existe deux languettes d'encliquetage (16) et les trous d'encliquetage (21) de chaque côté de l'espaceur de batterie.

10. Ensemble de protection pour noyaux électriques (3) d'une batterie selon la revendication 6, dans lequel une partie en arc de positionnement (22) s'étend depuis chaque côté latéral du panneau latéral (2), et la partie en arc de positionnement (22) est pliée vers le noyau électrique (3).

11. Batterie d'alimentation, comprenant un ensemble de protection pour noyaux électriques d'une batterie selon la revendication 7, et au moins un noyau électrique (3) reçu dans l'ensemble de protection.
